# EUROPÄISCHE PATENTANMELDUNG

(11) **EP 2 412 951 A1**
(43) Veröffentlichungstag der Anmeldung: **01.02.2012**
(21) Anmeldenummer: 10007756.9
(22) Anmeldetag: 26.07.2010
(51) Int. Cl.: F02C 6/00, F01D 15/10

(54) **Gasturbinenkraftwerk**

(71) Anmelder: SIEMENS AKTIENGESELLSCHAFT, 80333 München (DE)
(72) Erfinder: Böttcher, Andreas, Dr., 40822 Mettmann (DE); Deiss, Olga, 40627 Düsseldorf (DE); Engler, Thorsten, Dr., 47447 Moers (DE); Kluge, Andre, 48249 Dülmen (DE); Koebe, Mario, Dr., 45478 Mülheim an der Ruhr (DE); Maghon, Hans, 45481 Mülheim an der Ruhr (DE); Tüschen, Sabine, 46147 Oberhausen (DE); Wilmsen, Meike, 46117 Oberhausen (DE); Özkan, Kagan, 41470 Neuss (DE)

(57) **Zusammenfassung**

Die Erfindung betrifft ein Gasturbinenkraftwerk (1) mit zwei Gasturbinen (4). Um ein im Eigenbedarf verringertes Gasturbinenkraftwerk (1) bereitzustellen wird vorgeschlagen, dass die beiden Gasturbinen (4) als stationäre Gasturbinen (4) ausgestaltet sind und beide Gasturbinen-Rotoren mit ihrem verdichterseitigen Ende unmittelbar am Generator-Rotor eines einzigen Generators (2) unter Bildung eines Strangs (8) ankoppelbar sind.

## Beschreibung

Die Erfindung betrifft ein Gasturbinenkraftwerk mit zwei Gasturbinen und einem Generator.

Gasturbinenkraftwerke sind im Stand der Technik längstens bekannt. Sie umfassen dabei eine Gasturbine, die an einen elektrischen Generator angekoppelt ist. Diese Konfiguration wird dabei als Einwellenanlage bezeichnet. Bei Kraftwerksanlagen, in denen mehrere derartige Gasturbinenkraftwerke nebeneinander parallel geschaltet sind, spricht man von Zwei -oder Mehrwellenanlagen. Im Detail ist jeweils der Gasturbinenrotor an den Rotor des Generators mit Hilfe einer Kupplung angekoppelt. Sofern die Gasturbinenrotordrehzahl nicht mit der Netzfrequenz des Generators übereinstimmt, ist auch noch ein Getriebe zwischengeschaltet.

Weiter ist beispielsweise aus JP 2002-038007 bekannt, an einem Turbomaschinenstrang umfassend eine Gasturbine, eine Dampfturbine und einen Generator eine weitere Gasturbine anzukoppeln, um einen zweiten Generator einzusparen. Allerdings benötigen derartige Kraftwerksstränge umfangreiche Hilfssystem und Infrasturkuren, die einen besonders hohen Eigenverbrauch aufweisen. Außerdem ist der Betrieb eines solchen Turbomaschinenstrangs recht unflexibel, da aufgrund der zwischen der Gasturbine und dem Generator angeordneten Dampfturbine ein Alleinbetrieb der Gasturbine nicht oder nur mit erhöhten Verlusten möglich ist. Dieser Turbomaschinenstrang eignet sich folglich nicht für große Nennleistung zur Energieversorgung öffentlicher Stromnetze.

Aufgabe der Erfindung ist daher die Bereitstellung eines schnell startbaren Gasturbinenkraftwerks großer Leistung, dessen Herstellung besonders einfach und preiswert ist und welches im Eigenstromverbrauch reduziert ist, um den Wirkungsgrad des Gasturbinenkraftwerks insgesamt zu erhöhen.

Die der Erfindung zugrunde liegende Aufgabe wird mit einem Gasturbinenkraftwerk gemäß den Merkmalen des Anspruchs 1 gelöst.

Die Erfindung sieht vor, dass das Gasturbinenkraftwerk zumindest zwei Gasturbinen und einen Generator aufweist, deren Rotoren auf einem einzelnen Strang zu einer Einwellenanlage gekoppelt sind, wobei die beiden Gasturbinen als stationäre Gasturbinen ausgestaltet und beide Gasturbinen-Rotoren mit ihrem verdichterseitigen Ende unmittelbar am Generator-Rotor ankoppelbar sind.

Der Erfindung liegt dabei die Erkenntnis zugrunde, das mit Hilfe der vorgeschlagenen Kraftwerksstruktur auf Hilfsaggregate, die zum Betrieb zweiter separater Gasturbinen erforderlich sind, teilweise verzichtet werden kann, wenn ein Gasturbinenkraftwerk ausgestattet mit zwei Gasturbinen, nicht als Zweiwellenanlage ausgebildet ist, sondern nur als Einwellenanlage. Auch anstelle von zwei Getrieben ist nur ein Getriebe erforderlich. Selbstverständlich wird auch nur eine Startvorrichtung zum Starten der ersten Gasturbine benötigt, da im Betrieb die zum Starten der zweiten Gasturbine erforderliche Energie von der ersten Gasturbine bereitgestellt wird. Mit anderen Worten: die zweite Gasturbine kann die erste Gasturbine anschleppen.

Um eine kompakte Bauweise zu erreichen, sind die beiden Gasturbinen unmittelbar an dem Generator angekoppelt. Unmittelbar bedeutet dabei, dass keine andere Turbomaschine zwischen Generator und Gasturbine vorgesehen ist. Es dürfen lediglich ein Getriebe und/oder eine Kupplung zwischen den Rotoren von Gasturbine und Generator vorgesehen sein. Bevorzugtermaßen ist jeweils das verdichterseitige Ende des Gasturbinenrotors an den Rotor des Generators ankoppelbar, wobei der Generator-Rotor beidendseitig einen Flansch zum Ankoppeln jeweils eines Gasturbinenrotors aufweist. De facto ist dann eine der beiden Gasturbinen linksdrehend ausgestaltet und die andere rechtsdrehend ausgestaltet. Sofern die Gasturbinen die identische Leistung erbringen und somit dem gleichen Entwurf und der gleichen Konstruktion zugrunde liegen, sind diese sozusagen spiegelbildlich ausgestaltet. Dies hat den Vorteil, dass lediglich eine Konstruktion einer Gasturbine entworfen, evaluiert und freigegeben werden muss, die für zwei unterschiedliche Ausführungsformen der Gasturbine Grundlage bietet.

Gemäß einer bevorzugten Ausgestaltung der Erfindung ist die Nennleistung der beiden Gasturbinen jedoch unterschiedlich groß. Dies ist insbesondere dann von Vorteil, wenn ein Gasturbinenhersteller über Gasturbinen unterschiedlicher Leistungsklassen verfügt oder anbieten möchte, von denen er eine Leistungsklasse als linksdrehende Gasturbine ausgestaltet und die andere Leistungsklasse als rechtsdrehende Gasturbine ausgestaltet, so dass er dann die spiegelbildliche Fertigung von Gasturbinen vermeiden kann, unter Aufrechterhaltung eines breiten Angebotsspektrums von Gasturbinen unterschiedlicher Leistungsklassen. Dies reduziert die Herstellungskosten, beispielsweise weil auf doppelte (spiegelbildliche) Werkzeuge und Gießformen zur Gussherstellung der Turbinenschaufeln verzichtet werden kann.

Gemäß einer weiteren vorteilhaften Ausgestaltung der Erfindung beträgt die Nennleistung jeder Gasturbine mehr als 100 Megawatt (MW). In dieser Leistungsklasse war es bisher absolut unüblich, erfindungsgemäße Gasturbinenkraftwerke einzusetzen. Das aus dem Stand der Technik bekannte Gasturbinenkraftwerk war üblicherweise für besonders kleine Kraftwerksleistungen konzipiert. Es hat sich jedoch unerwarteter Weise herausgestellt, dass die Einsparung des Eigenstromverbrauchs eines Gasturbinenkraftwerks in besonderem Umfang reduziert werden kann, wenn auch für derartig große Kraftwerke als Einwellenanlage mit zwei stationären Gasturbinen und einem Generator ausgestaltet ist.

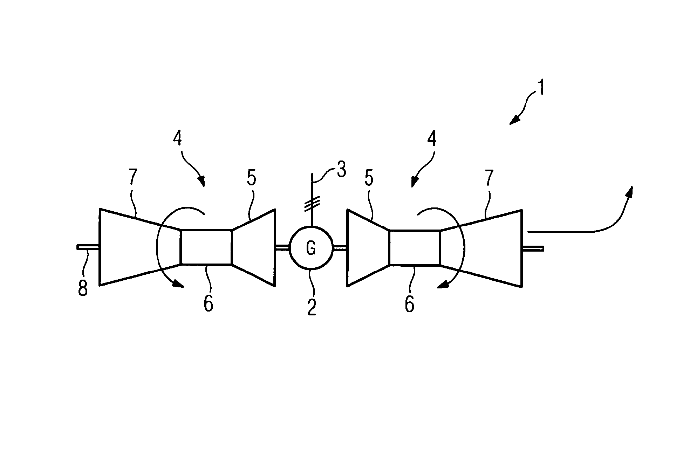

Die Erfindung wird anhand eines einzigen Ausführungsbeispiels näher erläutert. Die einzige Figur zeigt ein Gasturbinenkraftwerk, konzipiert als Einwellenanlage mit zwei Gasturbinen und einem gemeinsamen Generator.

Die einzige Figur zeigt ein Gasturbinenkraftwerk 1 mit einem gemeinsamen Generator 2, der an ein elektrisches Netz 3 zur Abgabe elektrischer Energie angeschossen ist. Der Generator-rotor ist dabei beidendseitig an jeweils eine Gasturbine 4 angeschlossen. Beide Gasturbinen 4 sind als stationäre Gasturbinen ausgebildet und weisen jeweils einen Kompressor 5, eine Verbrennungseinheit 6 und eine Turbineneinheit 7 auf. Die Verbrennungseinheit 6 kann dabei entweder als Ringbrennkammer oder als Rohrbrennkammer ausgebildet sein, mit gestufter oder ungestufter Verbrennung. Beide Gasturbinen 4 sind so zum Generator 2 ausgerichtet, dass deren kompressorseitiges Ende dem Generator 2 zugewandt ist. Dies hat den Vorteil, dass der Gasturbinenrotor am kalten Ende der Gasturbine aus der Maschine geführt wird, was von der Konstruktion der Gasturbine 4 wesentlich einfacher und zuverlässiger ist als die Durchführung am heißen, turbinenseitigen Ende der Gasturbine 4.

Mit der vorgeschlagenen Konfiguration eines Gasturbinenkraftwerks, bei dem die Gasturbinen 4 vorzugsweise unterschiedliche Nennleistungen aufweisen, wobei die Nennleistung vorzugsweise jeder stationären Gasturbine mehr als 100 MW beträgt, ist es möglich den Eigenstromverbrauch des Gasturbinenkraftwerks signifikant zu senken, da beispielsweise weniger Hilfsaggregate angeschafft, vorgesehen und betrieben werden müssen, als bei einem Gasturbinenkraftwerk mit einer Zweiwellenanlage, bei der an jeder Gasturbine jeweils ein elektrischer Generator angekoppelt ist. Neben einem zweiten elektrischen Generator kann beispielsweise auch die zweite Drehvorrichtung zum Antrieb des Rotors entfallen. Dies erhöht insgesamt den Gesamtwirkungsgrad des Gasturbinenkraftwerks.

Insgesamt betrifft die Erfindung ein Gasturbinenkraftwerk 1 mit zwei Gasturbinen 4. Um ein im Eigenbedarf verringertes Gasturbinenkraftwerk 1 bereitzustellen wird vorgeschlagen, dass die beiden Gasturbinen 4 als stationäre Gasturbinen 4 ausgestaltet sind und beide Gasturbinen-Rotoren mit ihrem verdichterseitigen Ende unmittelbar am Generator-Rotor eines einzigen Generators 2 unter Bildung eines Strangs 8 ankoppelbar sind.

## Patentansprüche

1. Gasturbinenkraftwerk (1)
mit zwei Gasturbinen (4) und einem Generator (2), deren Rotoren auf einem einzigen Strang angekoppelt sind,
**dadurch gekennzeichnet, dass**
die beiden Gasturbinen (4) als stationäre Gasturbinen (4) ausgestaltet sind und beide Gasturbinen-Rotoren mit ihrem verdichterseitigen Ende unmittelbar am Generator-Rotor ankoppelbar sind.

2. Gasturbinenkraftwerk (1) nach Anspruch 1,
bei dem die Gasturbinen (4) unterschiedliche Nenn-Leistungen aufweisen.

3. Gasturbinenkraftwerk (1) nach Anspruch 1 oder 2,
bei dem die Nennleistung jeder Gasturbine (4) mehr als 100 MW (Megawatt) beträgt.
